# EUROPÄISCHE PATENTSCHRIFT

(11) **EP 2 479 448 B1**
(45) Veröffentlichungstag und Bekanntmachung des Hinweises auf die Patenterteilung: **01.10.2014**
(21) Anmeldenummer: 11151288.5
(22) Anmeldetag: 18.01.2011
(51) Int. Cl.: B60T 11/18

(54) **Hydrodynamische Kupplung mit mehrstufiger Vorkammer**
Hydrodynamic coupling with multi-stage pre-chamber
Embrayage hydrodynamique doté d'une préchambre à plusieurs niveaux

(43) Veröffentlichungstag der Anmeldung: 25.07.2012
(73) Patentinhaber: Siemens Aktiengesellschaft, 80333 München (DE)
(72) Erfinder: Gödde, Peter, 46286, Dorsten (DE); Mallmann, Hans-Jochen, 48653, Coesfeld (DE)

(56) Entgegenhaltungen:
- EP-A2- 0 801 243
- EP-A2- 1 013 954
- WO-A1-2009/086876
- US-A- 3 934 687

## Beschreibung

Die vorliegende Erfindung betrifft eine hydrodynamische Kupplung gemäß dem Oberbegriff von Anspruch 1.

Hydrodynamische Kupplungen, auch Strömungskupplungen, Turbokupplungen oder Föttinger-Kupplungen genannt, sind allgemein bekannt und werden beispielsweise als Anlauf- und Überlastungskupplung zur Übertragung eines Drehmoments von einer Kraft- auf eine Arbeitsmaschine eingesetzt. Eine solche hydrodynamische Kupplung besteht vereinfacht aus einem beschaufelten Außenrad, das sogenannte Pumpenrad, das zusammen mit einer Schale ein Gehäuse bildet und drehfest mit einer Antriebswelle verbunden ist. Das Gehäuse umschließt einen Arbeitsraum und ist zumindest teilweise mit einer öl- oder wasserhaltigen Arbeitsflüssigkeit gefüllt. Innerhalb des Arbeitsraums ist ein beschaufeltes Innenrad, das sogenannte Turbinenrad, angeordnet, das mit einer koaxial zu der Antriebswelle gelagerten Abtriebswelle drehfest verbunden ist. Alternativ ist es möglich, die hydrodynamischen Kupplungen mit einem Innenantrieb zu versehen, bei denen das innenliegende Rad das Pumpenrad und das Außenrad das Turbinenrad bildet.

Im Betrieb versetzt eine an die Antriebswelle angeschlossene Kraftmaschine das Pumpenrad in Rotation, das die mechanische Energie in kinetische Strömungsenergie der Arbeitsflüssigkeit umwandelt. Im Turbinenrad wird diese Strömungsenergie wieder in mechanische Energie umgesetzt. Um die zu der Drehmomentübertragung notwendige Kreislaufströmung der Arbeitsflüssigkeit in dem Arbeitsraum zu erzeugen, ist ein Drehzahlunterschied, der sogenannte Schlupf, zwischen dem Pumpen- und dem Turbinenrad notwendig.

Da hydrodynamische Kupplungen das Anfahrdrehmoment in einem mechanischen Antriebsstrang begrenzen und drehschwingungsdämpfend sind, werden sie vor allem in Antrieben für Förderanlagen, wie zum Beispiel Gurtbandförderer, Becherwerke und Kettenförderer sowie für Schaufelradantriebe, Brecher, Rollenpressen, Mischer, Großventilatoren, Kesselspeisepumpen, Großkompressoren, Zentrifugen und in Hilfsantrieben für Mühlen eingesetzt. Durch das materialschonende Anfahrverhalten erhöhen sie vor allem die Lebensdauer angeschlossener Maschinen.

Eine hydrodynamische Kupplung der eingangs genannten Art ist beispielsweise in der EP 0 801 243 A2 beschrieben. Diese besitzt den allgemeinen Grundaufbau einer hydrodynamischen Kupplung. Weiterhin ist eine Vorkammer mit dem Außenrad drehfest verbunden. Die Vorkammer weist eine Trennwand auf, an deren radial äußerem Ende eine Zulaufbohrung ausgebildet ist, welche die Vorkammer flüssigkeitsleitend mit einem Zwischenraum verbindet. Der Zwischenraum ist axial durch die Trennwand und das Außenrad begrenzt und weist an seinem radial äußeren Ende ein radial nach außen gewölbtes Wannenteil auf. In dem Zwischenraum ist eine Staudruckpumpe vorgesehen, welche den Zwischenraum mit dem Arbeitsraum flüssigkeitsleitend verbindet. Die Staudruckpumpe ist in Form eines länglichen Rohrstutzens ausgebildet und erstreckt sich von dem radial äußeren Endbereich der Zwischenkammer hin zum radial inneren Endbereich der Zwischenkammer. Konkret weist die Staudruckpumpe eingangsseitig, d.h. an dem radial äußeren Ende, ein Mundstück auf, welches in einen von dem Wannenteil definierten Wannenbereich eintaucht. Ausgangsseitig, d.h. an dem radial inneren Ende, schließt sich ein Drehventil an die Staudruckpumpe an, dessen Strömungsdurchmesser im Verhältnis zum Strömungsdurchmesser der Staudruckpumpe kleiner ist und dessen Strömungskanal aus einer radialen Ausrichtung in eine axiale Ausrichtung umgelenkt wird. Zur Steuerung des Drehventils ist ein Drehmagnet vorgesehen, der abhängig vom Zustand der hydrodynamischen Kupplung das Drehventil in Richtung des Arbeitsraums öffnet und in Richtung der Vorkammer schließt bzw. umgekehrt.

Im Betrieb rotiert die hydraulische Kupplung um ihre eigene Drehachse, wodurch in an sich bekannter Weise Zentrifugalkräfte auf eine sich in der Kupplung befindliche Arbeitsflüssigkeit wirken. Aufgrund der einwirkenden Zentrifugalkräfte wird die sich in der Vorkammer befindliche Arbeitsflüssigkeit an das radial äußere Ende der Vorkammer gedrückt und weicht über den Zulaufkanal in den Zwischenraum aus. Dort wird es durch die radial nach außen wirkenden Zentrifugalkräfte in den durch das Wannenteil definierten Wannenbereich gedrückt. Die sich in dem Arbeitsraum befindliche Arbeitsflüssigkeit wird ebenfalls durch die Zentrifugalkräfte radial nach außen bewegt und strömt über in dem Außenrad ausgebildete Düsenbohrungen in den radial außenliegenden Wannenbereich der Zwischenkammer. Erst durch den ansteigenden Arbeitsflüssigkeitspegel in der Zwischenkammer wird die Arbeitsflüssigkeit entgegen der Zentrifugalkraft durch die Staudruckpumpe radial nach innen gedrückt. Durch die Verengung des Strömungsquerschnitts in dem sich an das Staurohr anschließenden Drehventils erhöht sich die Fließgeschwindigkeit der Arbeitsflüssigkeit und der Druck sinkt (Bernoulli-Effekt), so dass die Arbeitsflüssigkeit in den angrenzenden Arbeitsraum strömen kann.

Bedingt durch diese Bauart wird die Arbeitsflüssigkeit dem Arbeitsraum nicht über einen radial außenliegenden Kanal zugeführt, sondern muss entgegen der auf das Fluid radial nach außen wirkenden Zentrifugalkräfte über die Staudruckpumpe radial nach innen gepumpt und unter zu Hilfenahme des Bernoulli-Effekts in den Arbeitsraum gedrückt werden. Zur Überwindung der Zentrifugalkräfte reicht aber die sich in der Vorkammer befindliche Menge an der Arbeitsflüssigkeit allein nicht aus, so dass sich erst dann ein Fluidfluss zwischen dem Wannenbereich der Zwischenkammer und dem Arbeitsraum einstellt, wenn weitere Arbeitsflüssigkeit aus dem Arbeitsraum über die Drosselbohrungen des Außenrads in den radial außenliegenden Wannenbereich des Zwischenraums gedrückt wird. Steigt dann der Fluidpegel in dem Zwischenraum an, steigt auch der Fluidpegel in der Staudruckpumpe und die Arbeitsflüssigkeit wird radial nach innen gedrückt. Erst wenn der Fluidpegel das Drehventil erreicht, kann die Arbeitsflüssigkeit aufgrund des verengten Strömungsquerschnitts in den Arbeitsraum abfließen. Dies bedingt allerdings, dass eingangsseitig stets mehr Arbeitsflüssigkeit in die Staudruckpumpe gedrückt wird als ausgangsseitig durch das Drehventil abfließt.

An dieser Ausgestaltung wird zum Teil als nachteilig empfunden, dass der Anfahrvorgang zeitlich relativ stark gestreckt wird, da die aus der Vorkammer in die Zwischenkammer strömende Arbeitsflüssigkeit nicht direkt dem Arbeitsraum zugeführt werden kann, sondern sich erst in dem Wannenbereich des Zwischenkammer sammelt, bis der Fluidpegel aufgrund der aus dem Arbeitsraum nachströmenden Arbeitsflüssigkeit derart hoch ist, dass die auf das Fluid wirkenden Zentrifugalkräfte überwunden werden können. Weiterhin nachteilig ist, dass zur Anpassung der Drehmomentkennlinie eine elektronische Steuerung notwendig ist, da - anders als bei der erfindungsgemäßen hydrodynamischen Kupplung die Vorkammer durch das Trennelement nicht in mehrere Kammern unterteilt. Somit ist eine elektronische Steuerung notwendig, um den Volumenstrom über das Drehventil regeln zu können. Schließlich ist nachteilig, dass die Vorrichtung aufgrund des Staurohrs sowie der elektronischen Bauteile, nämlich das Drehventil und der Drehmagnet, komplex und störanfällig ist und mit elektrischem Strom versorgt werden muss.

Aus der DE 33 18 462 A1 ist eine weitere hydrodynamische Kupplung bekannt. Diese besitzt ebenfalls den allgemeinen Grundaufbau einer hydrodynamischen Kupplung. Darüber hinaus ist in dem Gehäuse antriebsseitig eine Vorkammer ausgebildet, die über einen radial inneren Rücklaufkanal und einen radial äußeren Zulaufkanal mit dem Arbeitsraum verbunden ist. Der Strömungsquerschnitt des Zulaufkanals ist durch ein elektronisches Stellglied einstellbar, so dass der Volumenstrom der Arbeitsflüssigkeit von der Vorkammer über den Zulaufkanal in den Arbeitsraum veränderbar ist. Zur Steuerung des elektronischen Stellglieds werden Mess- und Auswerteeinheiten benötigt.

Im Stillstand ruht die Arbeitsflüssigkeit statisch in der hydrodynamischen Kupplung und füllt den unteren Bereich des Arbeitsraumes sowie den unteren Bereich der Vorkammer. Über die Antriebswelle wird das Pumpenrad in Rotation versetzt. Die mit zunehmender Drehzahl steigenden Zentrifugalkräfte drücken die Arbeitsflüssigkeit an die radiale Außenwand des Arbeitsraumes. Zudem strömt die sich in der Vorkammer befindliche Arbeitsflüssigkeit über den Zulaufkanal zeitlich verzögert in den Arbeitsraum nach. Der geringe Füllstand der Arbeitsflüssigkeit in dem Arbeitsraum in Anfahrzustand ermöglicht, dass die hydrodynamische Kupplung mit einem niedrigeren Anfahrdrehmoment anfährt.

An dieser Ausgestaltung wird zum Teil als nachteilig empfunden, dass die hydrodynamische Kupplung aufgrund der elektronischen Bauteile aufwendig und teuer herzustellen ist. Zudem sind die elektronischen Bauteile störanfällig und müssen mit elektronischem Strom versorgt werden.

Aufgabe der vorliegenden Erfindung ist es daher, eine möglichst wartungsfreie hydrodynamische Kupplung bereitzustellen, die ein geeignetes Anfahrdrehmoment, das keine hohen Maximalwerte aufweist und zudem den Anfahrvorgang zeitlich nicht zu stark streckt, erreicht, eine kompakte Bauweise aufweist sowie einfach und preiswert herzustellen ist.

Diese Aufgabe ist erfindungsgemäß bei einer hydrodynamischen Kupplung der eingangs genannten Art gelöst durch die kennzeichnenden Merkmale von Anspruch 1.

Der Erfindung liegt somit die Überlegung zugrunde, den Volumenstrom der Arbeitsflüssigkeit von der Vorkammer in den Arbeitsraum in Abhängigkeit von dem Füllstand der Arbeitsflüssigkeit in der Vorkammer zu verändern.

Hierzu schlägt die Erfindung vor, eine Vorkammer über wenigstens ein Trennelement, das sich über den gesamten Umfangsbereich der Vorkammer in die Vorkammer erstreckt, in mehrere Vorkammerbereiche aufzuteilen. Dazu ist das wenigstens eine Trennelement an einer radialen Außenwand der Vorkammer ausgebildet und weist wenigstens einen Speisekanal auf, der unterhalb eines vorgegebenen Füllstands einen kleineren Strömungsquerschnitt als der Zulaufkanal besitzt. Somit hält das wenigstens eine Trennelement einen Teil der Arbeitsflüssigkeit in einem axial außerhalb des Trennelements liegenden Bereich der Vorkammer zurück, der im Betrieb lediglich über den Speisekanal in den radial innerhalb des Trennelements liegenden Bereich der Vorkammer nachströmt. Da der Speisekanal zumindest unterhalb eines vorgegebenen Füllstands in der Vorkammer einen kleineren Strömungsquerschnitt als der Zulaufkanal aufweist, wirkt dieser dann als Drossel. Durch den Einsatz mehrerer Trennelemente kann eine Vorkammer auch in mehr als zwei Bereiche aufgeteilt werden, die jeweils ein unterschiedliches Nachspeiseverhalten aufweisen können.

Beim Anfahrvorgang wird die Arbeitsflüssigkeit aufgrund der einwirkenden Zentrifugalkräfte an die radiale Außenwand der Vorkammer gedrückt. Zu Beginn liegt der Flüssigkeitspegel in der Vorkammer oberhalb des Trennelements, so dass die Arbeitsflüssigkeit ungehindert über den Zulaufkanal in den Arbeitsraum strömt. Wenn der Flüssigkeitspegel in der Vorkammer mit der radial inneren Stirnfläche des Trennelements abschließt, sinkt der Flüssigkeitspegel in dem ersten und dem zweiten Bereich gleichmäßig ab. Erreicht der Flüssigkeitspegel in dem zweiten Bereich einen Füllstand, ab dem der Speisekanal einen kleineren Strömungsquerschnitt als der Zulaufkanal aufweist, entleert sich der erste Bereich der Vorkammer schneller, als die Arbeitsflüssigkeit aus dem zweiten Bereich über den als Drossel wirkenden Speisekanals in den ersten Bereich nachströmt. In Folge dessen strömt die Arbeitsflüssigkeit über den Zulaufkanal langsamer in den Arbeitsraum nach. Es ergibt sich somit im Anfahrzustand ein hoher Volumenstrom der Arbeitsflüssigkeit von der Vorkammer in den Arbeitsraum, der im Betrieb mit sinkendem Flüssigkeitspegel in der Vorkammer abfällt.

Zusammenfassend fährt durch das zeitlich verzögerte Nachströmen der Arbeitsflüssigkeit von der Vorkammer in den Arbeitsraum eine Arbeitsmaschine mit einem ausreichend hohen Anfahrdrehmoment ohne hohe Maximalwerte und damit einer stark entlasteten Kraftmaschine an. Durch den zunächst hohen Volumenstrom der Arbeitsflüssigkeit im Anfahrzustand von der Vorkammer in den Arbeitsraum kann auch ein großes Lastmoment, das zum Beispiel als Losbrechmoment bereitgestellt werden muss, durch den Drehmomentanstieg der hydrodynamischen Kupplung überwunden werden. Mit steigender Drehzahl sinkt der Flüssigkeitspegel zeitabhängig in der Vorkammer, wodurch der Volumenstrom der Arbeitsflüssigkeit von der Vorkammer in den Arbeitsraum abnimmt. Darüber hinaus lässt sich der Verlauf der Drehmomentkennlinie durch die Veränderung der Anzahl der Trennelemente und/oder durch die Anzahl der Speisekanäle und deren Strömungsquerschnitte, die jede geometrische Form, insbesondere eine runde, rechteckige oder schlitzförmige, annehmen können, sehr genau bestimmen.

In bevorzugter Weise können das Außenrad mit einer Antriebswelle und das Innenrad mit einer Abtriebswelle drehfest verbunden sein. Das Nachströmverhalten der Arbeitsflüssigkeit von der Vorkammer in den Arbeitsraum im Anfahrvorgang kann bei dem sogenannten Außenradantrieb, d.h. das Außenrad arbeitet als Pumpenrad und das Innenrad als Turbinenrad, im Vergleich zu einem Innenradantrieb besser bestimmt werden.

In weiterer Ausgestaltung der Erfindung ist vorgesehen, dass wenigstens ein Speisekanal in einem radial äußeren Bereich des Trennelements vorgesehen ist und einen kleineren Strömungsquerschnitt als der Zulaufkanal aufweist. Dadurch strömt nahezu der gesamte Teil der Arbeitsflüssigkeit, der durch das Trennelement zunächst zurückgehalten wird, von dem axial außerhalb in den axial innerhalb des Trennelements liegenden Bereich der Vorkammer. Zudem wirkt der Speisekanal aufgrund des kleineren Strömungsquerschnitts als Drossel.

Bei einer Weiterbildung der vorliegenden Erfindung ist vorgesehen, dass der wenigstens eine Speisekanal einen im Wesentlichen runden Strömungsquerschnitt aufweist. Dadurch ist der Speisekanal einfach herzustellen.

Gemäß einer weiteren Ausgestaltung der hydrodynamischen Kupplung ist vorgesehen, dass der wenigstens eine Speisekanal in der Form eines im Wesentlichen radial verlaufenden Schlitzes ausgebildet ist, der sich insbesondere bis in den radial äußeren Bereich des Trennelements erstreckt. Dadurch kann der Volumenstrom der Arbeitsflüssigkeit von dem radial außerhalb in den radial innerhalb des Trennelements liegenden Bereich der Vorkammer füllstandabhängig sehr genau bestimmt werden.

In bevorzugter Weise kann das Verhältnis zwischen Höhe und mittlerer Breite des wenigstens einen schlitzförmig ausgebildeten Speisekanals 4:1 oder mehr betragen. Ab diesem Verhältnis von 4:1 weist der schlitzförmig ausgebildete Speisekanal gleich gute Eigenschaften wie wenigstens zwei radial zueinander beabstandete Speisekanäle mit jeweils rundem Strömungsquerschnitt auf.

Des Weiteren kann der schlitzförmige Speisekanal eine variable Breite aufweisen, die in bevorzugter Weise mit abnehmendem Abstand zu der Drehachse insbesondere kontinuierlich größer wird. Dadurch ergibt sich mit sinkendem Flüssigkeitspegel in dem axial außerhalb des Trennelements liegenden Bereich der Vorkammer ein kontinuierlich abnehmender Volumenstrom der Arbeitsflüssigkeit von der Vorkammer über den Zulaufkanal in den Arbeitsraum.

In weiterer Ausgestaltung der Erfindung ist vorgesehen, dass wenigstens ein Trennelement mit einer radialen Innenwand der Vorkammer in Anlage kommt, wobei das Trennelement mehrere Speisekanäle aufweist, von denen wenigstens ein Speisekanal im radial inneren Bereich des Trennelements vorgesehen ist. Wenn sich das Trennelement über die gesamte Höhe der Vorkammer erstreckt, gewährleistet der radial innere Speisekanal einen Druckausgleich zwischen dem axial innerhalb und dem axial außerhalb des Trennelements liegenden Bereich der Vorkammer.

Weiterhin können die Speisekanäle unterschiedliche Strömungsquerschnitte aufweisen. Dadurch ist der Volumenstrom der Arbeitsflüssigkeit von dem axial außerhalb in den axial innerhalb des Trennelements liegenden Bereich der Vorkammer füllstandabhängig sehr genau bestimmbar.

Des Weiteren kann vorgesehen sein, dass mehrere in Umfangsrichtung voneinander getrennte Vorkammern vorgesehen sind. In bevorzugter Weise weist die Vorkammer einen ringförmigen Innenraum auf. Dadurch ist die Vorkammer einfach und preiswert herzustellen.

Bei einer Weiterbildung der vorliegenden Erfindung ist vorgesehen, dass auf der der Vorkammer gegenüberliegenden Seite des Arbeitsraums zusätzlich wenigstens eine weitere Vorkammer vorgesehen und mit dem Außenrad drehfest verbunden ist, wobei die Vorkammern jeweils über wenigstens einen Zulaufkanal und einen Rücklaufkanal mit dem Arbeitsraum verbunden sind. Durch das unterschiedliche Nachspeiseverhalten der sich gegenüberliegenden Vorkammern kann der Verlauf der Drehmomentkennlinie sehr genau bestimmen. Dabei können die wenigstens zwei Vorkammern volumenmäßig unterschiedlich groß ausgebildet sein.

Hinsichtlich weiterer vorteilhafter Ausgestaltungen der Erfindung wird auf die Unteransprüche sowie die nachfolgende Beschreibung von einem Ausführungsbeispiel unter Bezugnahme auf die beiliegende Zeichnung verwiesen. In der Zeichnung zeigt:
- Figur 1: eine hydrodynamische Kupplung gemäß einer ersten Ausführungsform der vorliegenden Erfindung in einer Querschnittansicht;
- Figur 2: in vergrößerter Darstellung eine Vorkammer der hydrodynamischen Kupplung aus Figur 1 mit einem hohen Füllstand;
- Figur 3: in vergrößerter Darstellung eine Vorkammer der hydrodynamischen Kupplung aus Figur 1 mit einem niedrigen Füllstand;
- Figur 4: ein Diagramm eines Sekundärkennfelds der hydrodynamischen Kupplung aus Figur 1;
- Figur 5: eine hydrodynamische Kupplung gemäß einer zweiten Ausführungsform der vorliegenden Erfindung in einer Querschnittansicht mit einem hohen Füllstand; und
- Figur 6: die hydrodynamische Kupplung aus der Figur 6 in einer Querschnittsansicht mit einem niedrigen Füllstand.

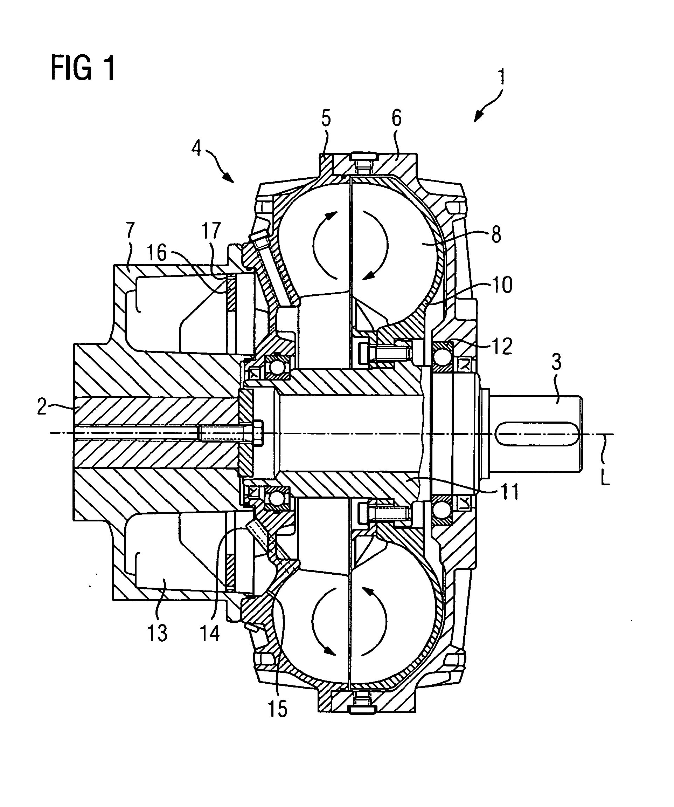

In der Figur 1 ist eine hydrodynamische Kupplung 1 gemäß einer ersten Ausführungsform der vorliegenden Erfindung dargestellt. Die hydrodynamische Kupplung 1 dient zur Übertragung eines Drehmoments von einer Antriebswelle 2 auf eine Abtriebswelle 3. In an sich bekannter Weise gehört zu der hydrodynamischen Kupplung 1 ein um eine Drehachse L rotierbar angeordnetes Gehäuse 4, das aus einem Außenrad 5 mit radialen Schaufeln, einer Schale 6 und einem Vorkammergehäuse 7 besteht. Das Außenrad 5 ist mit einer Antriebswelle 2 drehfest verbunden und arbeitet als Pumpenrad. Zusammen mit der Schale 6 definiert es einen torusförmigen Arbeitsraum 8, der teilweise mit einer öl- oder wasserhaltigen Arbeitsflüssigkeit 9 gefüllt ist. Innerhalb des Arbeitsraums 8 ist ein Innenrad 10 mit radial gerichteten Schaufeln angeordnet, das mit der koaxial zu der Antriebswelle 2 gelagerten Abtriebswelle 3 über eine Nabe 11 drehfest verbunden ist und als Turbinenrad arbeitet. Auf der Nabe 11 des Turbinenrads 10 stützt sich das Gehäuse 4 über Wälzlager 12 ab.

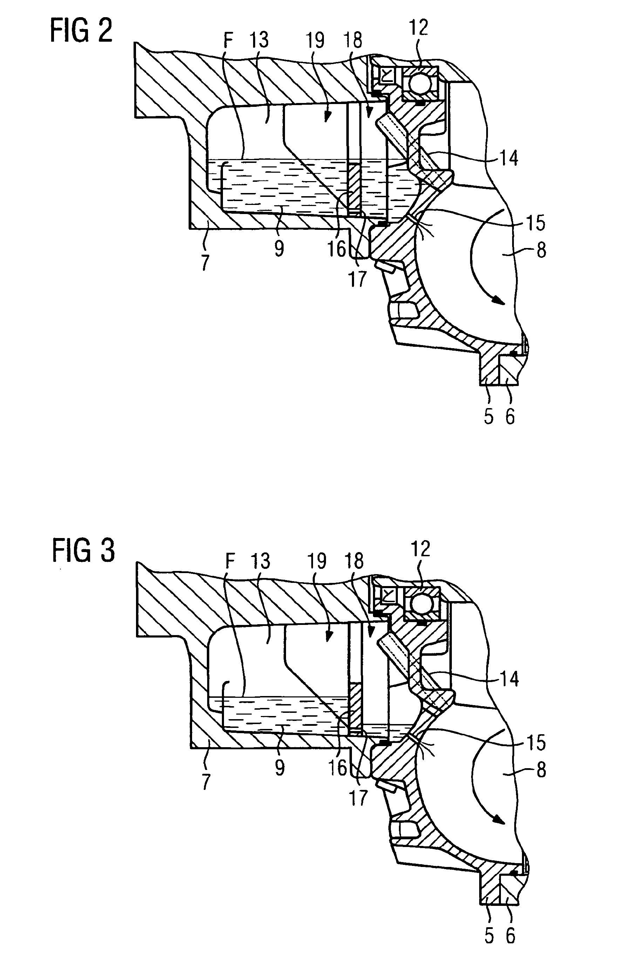

In dem Gehäuse 4 ist antriebsseitig eine ringförmige Vorkammer 13 ausgebildet, die in einem radial inneren Bereich über einen Rücklaufkanal 14 und in einem radial äußeren Bereich über einen Zulaufkanal 15 mit dem Arbeitsraum 8 verbunden ist. Ein Trennelement 16 ist an der radialen Außenwand der Vorkammer 13 ausgebildet und erstreckt sich über den gesamten Umfangsbereich der Vorkammer 13 in die Vorkammer 13. In der Figur 2 ist gut erkennbar, dass das Trennelement 16 die Vorkammer 13 in einen ersten, axial innerhalb und in einen zweiten, axial außerhalb des Trennelements 16 liegenden Bereich 18, 19 aufteilt. Zudem weist der radial äußere Bereich des Trennelements 16 einen Speisekanal 17 mit einem runden Strömungsquerschnitt auf, der kleiner als der Strömungsquerschnitt des Zulaufkanals 15 ist.

Im Stillstand füllt die Arbeitsflüssigkeit 9 den unteren Bereich des Arbeitsraums 8 sowie den unteren Bereich der Vorkammer 13. In der Figur 2 ist ein Flüssigkeitspegel in der Vorkammer 13 durch die Linie F angedeutet, der je nach Füllgrad FG der hydrodynamischen Kupplung 1 variieren kann. Dabei bezeichnet der Füllgrad FG das Verhältnis von Gesamtvolumen der hydrodynamischen Kupplung 1 und Volumen der eingefüllten Arbeitsflüssigkeit 9.

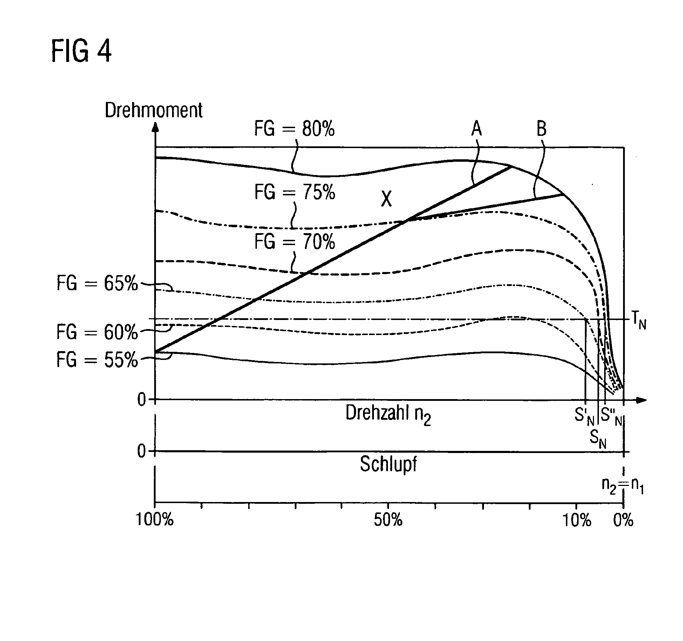

Über die Antriebswelle 2 wird das Primärrad 5 in Rotation versetzt, wodurch die Arbeitsflüssigkeit 9 aufgrund der Zentrifugalkräfte an die radialen Außenwände des Arbeitsraums 8 und der Vorkammer 13 gedrückt wird. In der Figur 2 ist erkennbar, dass im Anfahrzustand der hydrodynamischen Kupplung 1 die Vorkammer 13 einen im Vergleich zum Stillstand nahezu unverändert hohen Flüssigkeitspegel F aufweist. Der kleine Strömungsquerschnitt des Zulaufkanals 15 wirkt als Drossel, so dass die Arbeitsflüssigkeit 9 verzögert von der Vorkammer 13 über den Zulaufkanal 15 in den Arbeitsraum 8 strömt. Aufgrund der geringen Füllmenge der Arbeitsflüssigkeit 9 in dem Arbeitsraum 8 im Anfahrzustand fährt die hydrodynamische Kupplung 1, wie in der Figur 4 dargestellt, mit einem niedrigen Anfahrdrehmoment an.

Solange der Flüssigkeitspegel F der Arbeitsflüssigkeit 9 in der Vorkammer 13 oberhalb des Trennelements 16 liegt, strömt die Arbeitsflüssigkeit 9 von der Vorkammer 13 über den Zulaufkanal 15 in den Arbeitsraum 8. In Folge dessen steigt das Drehmoment, wie in der Figur 4 dargestellt, bis zum Erreichen des Punktes X an.

Wenn der Flüssigkeitspegel F in der Vorkammer 13, wie in der Figur 3 dargestellt, mit der radial inneren Stirnfläche des Trennelements 16 abschließt, entleert sich zunächst der erste Bereich 18 der Vorkammer 13 über den Zulaufkanal 15, da die Arbeitsflüssigkeit 9 aus dem zweiten Bereich 19 über den als Drossel wirkenden Speisekanal 17 in den ersten Bereich 18 verzögert nachströmt. Durch das verzögerte Nachspeiseverhalten des zweiten Bereichs 19 der Vorkammer 13 vermindert sich der Volumenstrom der Arbeitsflüssigkeit 9 von dem zweiten Bereich 19 über den ersten Bereich 18 und den Zulaufkanal 15 in den Arbeitsraum 8. Die Drehmomentkennlinie der hydrodynamischen Kupplung 1 flacht wie in der Figur 4 dargestellt ab und erreicht im Vergleich zu einem Maximaldrehmoment A einer vorbekannten hydrodynamischen Kupplung ohne Trennelemente ein niedrigeres Maximaldrehmoment B. Somit kann beispielsweise die Lebensdauer eines angeschlossenen Förderbands erhöht werden oder das Förderband kann schwächer dimensioniertes bzw. leichter ausgelegt werden, um es günstiger herzustellen.

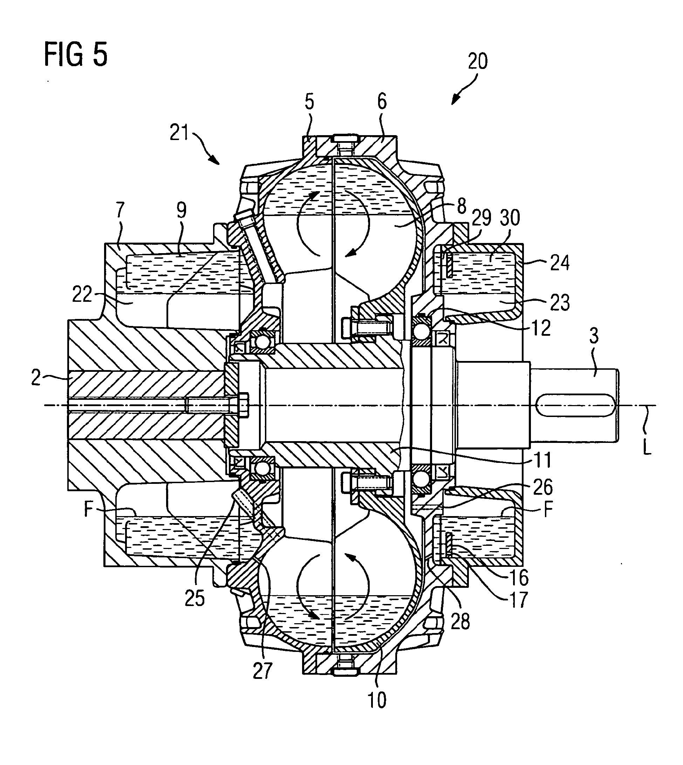

In der Figur 5 ist eine hydrodynamische Kupplung 20 gemäß einer zweiten Ausführungsform der vorliegenden Erfindung dargestellt. Der Aufbau der hydrodynamischen Kupplung 20 entspricht dem allgemeinen Grundaufbau der hydrodynamischen Kupplung 1 aus der Figur 1. Im Unterschied zu der ersten Ausführungsform weist die zweite Ausführungsform in einem Gehäuse 21 zusätzlich zu einer ringförmigen Vorkammer 22 auf der der Vorkammer 22 gegenüberliegenden Seite des Arbeitsraums 8 eine weitere, volumenmäßig kleinere, ringförmige Vorkammer 23 auf. Beide Vorkammern 22, 23 sind in dem Gehäuse 21, das um eine Drehachse L rotierbar angeordnet ist und zusätzlich zu dem Außenrad 5, der Schale 6 und dem Vorkammergehäuse 7 aus einer Außenschale 24 besteht, angeordnet und drehfest mit dem Außenrad 5 verbunden. Die Vorkammern 22, 23 sind jeweils in einem radial inneren Bereich über einen Rücklaufkanal 25, 26 und in einem radial äußeren Bereich über einen Zulaufkanal 27, 28 mit dem Arbeitsraum 8 verbunden. Beide Zulaufkanäle 27, 28 weisen die gleichen Strömungsquerschnitte auf.

In der weiteren Vorkammer 23 ist analog zu der ersten Ausführungsform der vorliegenden Erfindung ein Trennelement 16 an der radialen Außenwand der Vorkammer 23 ausgebildet und erstreckt sich über den gesamten Umfangsbereich der Vorkammer 23 in die Vorkammer 23. In der Figur 5 ist gut erkennbar, dass das Trennelement 16 die Vorkammer 23 in einen ersten, axial innerhalb und in einen zweiten, axial außerhalb des Trennelements 16 liegenden Bereich 29, 30 aufteilt. Zudem weist der radial äußere Bereich des Trennelements 16 einen Speisekanal 17 mit einem runden Strömungsquerschnitt auf, der kleiner als der Strömungsquerschnitt des Zulaufkanals 15 ist. Alternativ können weitere Trennelemente 16 in der Vorkammer 22 und/oder der Vorkammer 23 oder nur in der Vorkammer 22 bzw. Vorkammer 23 ausgebildet sein.

Im Betrieb verhält sich das Vorkammersystem aus den zwei sich gegenüberliegenden Vorkammern 22, 23 genauso, wie eine volumenmäßig gleich große Vorkammer 13 gemäß der ersten Ausführungsform der vorliegenden Erfindung. Solange der Flüssigkeitspegel F der Arbeitsflüssigkeit 9 in den Vorkammer 22, 23, wie in der Figur 5 dargestellt, oberhalb des Trennelements 16 liegt, strömt die Arbeitsflüssigkeit 9 von beiden Vorkammern 22, 23 über die Zulaufkanäle 27, 28 in den Arbeitsraum 8.

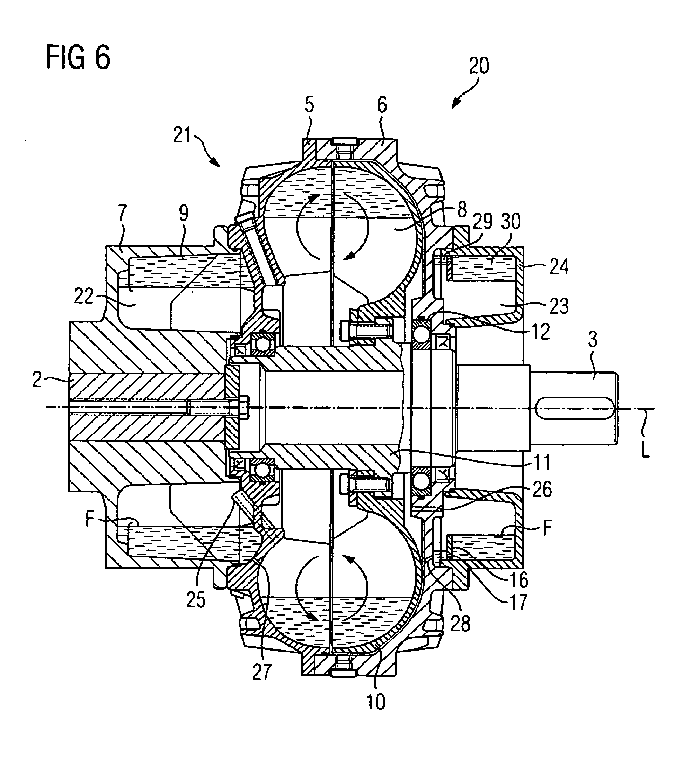

Wenn der Flüssigkeitspegel F in der weiteren Vorkammer 23, wie in der Figur 6 dargestellt, mit der radial inneren Stirnfläche des Trennelements 16 abschließt, entleert sich zunächst der erste Bereich 29 der Vorkammer 23 über den Zulaufkanal 28, da die Arbeitsflüssigkeit 9 aus dem zweiten Bereich 30 über den als Drossel wirkenden Speisekanal 17 in den ersten Bereich 29 verzögert nachströmt. Der Volumenstrom der Arbeitsflüssigkeit 9 der Vorkammer 22 durch den Zulaufkanal 27 bleibt bis zum Entleeren konstant. Danach stellt sich aufgrund des verminderten Nachspeiseverhaltens der weiteren Vorkammer 23 ein verminderter Volumenstrom der Arbeitsflüssigkeit 9 von der weiteren Vorkammer 23 in den Arbeitsraum 8 ein, bis dieser ebenfalls zu Null wird. Durch das verminderte Nachspeiseverhalten flacht die Drehmomentkennlinie in analoger Weise zu der ersten Ausführungsform gemäß Figur 4 ab.

In der Zeichnung nicht erkennbar ist, dass der Speisekanal 17 in den Ausführungsformen gemäß Figur 1 und Figur 5 auch einen im Wesentlichen radial verlaufenden, schlitzförmig ausgebildeten Strömungsquerschnitt aufweisen kann. Zudem können durch das Vorsehen mehrerer Trennelemente 16 die Vorkammern 13, 22, 23 in mehr als zwei Bereiche 18, 19 bzw. 29, 30 aufgeteilt werden, die jeweils ein unterschiedliches Nachspeiseverhalten aufweisen können.

Alternativ können auch mehrere voneinander getrennte Vorkammern 13, 22, 23 rotationssymmetrisch um die Drehachse L angeordnet sein. Die Vorkammern 13, 22, 23 können jeweils über wenigstens einen Rücklaufkanal 14, 25, 26 und einen Zulaufkanal 15, 27, 28 mit dem Arbeitsraum 8 verbunden sein, wobei in wenigstens einer der Vorkammern 13, 22, 23 wenigstens ein Trennelement 16 ausgebildet ist.

Anstatt des Außenradantriebs in den vorbeschriebenen Ausführungsformen kann auch das Innenrad 10 in analoger Weise angetrieben werden.

In der Zeichnung ist nicht erkennbar, dass zusätzlich zu dem Außen- und dem Innenrad 5, 10 ein Leitrad vorgesehen sein kann, um einen hydrodynamischen Wandler analog zu betreiben.

## Patentansprüche

1. Hydrodynamische Kupplung (1, 20) mit einem beschaufelten Außenrad (5) und einer Schale (6), die miteinander einen Arbeitsraum (8) bilden und um eine Drehachse (L) gemeinsam rotierbar angeordnet sind, einem innerhalb des Arbeitsraums (8) vorgesehenen beschaufelten Innenrad (10), das relativ zu dem Außenrad (5) und der Schale (6) rotierbar um die Drehachse (L) angeordnet ist, sowie wenigstens einer Vorkammer (13, 22, 23), die drehfest mit dem Außenrad (5) verbunden ist, wobei ein radial äußerer Bereich der Vorkammer (13, 22, 23) über einen Zulaufkanal (15, 27, 28) und ein radial innerer Bereich der Vorkammer (13, 22, 23) über einen Rücklaufkanal (14, 25, 26) mit dem Arbeitsraum (8) verbunden sind, wobei wenigstens ein Trennelement (16) an einer radialen Außenwand der Vorkammer (13, 22, 23) ausgebildet ist und sich über den gesamten Umfangsbereich der Vorkammer (13, 22, 23) in die Vorkammer (13, 22, 23) erstreckt, wobei das Trennelement (16) wenigstens einen Speisekanal (17) aufweist, der zumindest unterhalb eines vorgegebenen Füllstands in der Vorkammer (13, 22, 23) einen kleineren Strömungsquerschnitt als der Zulaufkanal (15, 27, 28) aufweist,
**dadurch gekennzeichnet, dass**
die Vorkammer (13) in einem radial inneren Bereich über den Rücklaufkanal (14) und in einem radial äußeren Bereich über den Zulaufkanal (15) mit dem Arbeitsraum (8) verbunden ist.

2. Hydrodynamische Kupplung (1, 20) nach Anspruch 1,
**dadurch gekennzeichnet, dass**
das Außenrad (5) mit einer Antriebswelle (2) und das Innenrad (10) mit einer Abtriebswelle (3) drehfest verbunden sind.

3. Hydrodynamische Kupplung (1, 20) nach Anspruch 1 oder 2,
**dadurch gekennzeichnet, dass**
wenigstens ein Speisekanal (17) in einem radial äußeren Bereich des Trennelements (16) vorgesehen ist und einen kleineren Strömungsquerschnitt als der Zulaufkanal (15, 27, 28) aufweist.

4. Hydrodynamische Kupplung (1, 20) nach einem der vorherigen Ansprüche,
**dadurch gekennzeichnet, dass**
wenigstens ein Speisekanal (17) einen im Wesentlichen runden Strömungsquerschnitt aufweist.

5. Hydrodynamische Kupplung (1, 20) nach einem der vorherigen Ansprüche,
**dadurch gekennzeichnet, dass**
wenigstens ein Speisekanal (17) in der Form eines im Wesentlichen radial verlaufenden Schlitzes ausgebildet ist, der sich insbesondere bis in den radial äußeren Bereich des Trennelements (16) erstreckt.

6. Hydrodynamische Kupplung (1, 20) nach Anspruch 5,
**dadurch gekennzeichnet, dass**
das Verhältnis zwischen Höhe und mittlerer Breite des wenigstens einen schlitzförmig ausgebildeten Speisekanals (17) 4:1 oder mehr beträgt.

7. Hydrodynamische Kupplung (1, 20) nach Anspruch 5 oder 6, **dadurch gekennzeichnet, dass**
der schlitzförmige Speisekanal (17) eine variable Breite aufweist.

8. Hydrodynamische Kupplung (1, 20) nach Anspruch 7,
**dadurch gekennzeichnet, dass**
die Breite mit abnehmendem Abstand zu der Drehachse (L) größer wird.

9. Hydrodynamische Kupplung (1, 20) nach Anspruch 8, **dadurch gekennzeichnet, dass**
die Breite mit abnehmendem Abstand zu der Drehachse (L) kontinuierlich größer wird.

10. Hydrodynamische Kupplung (1, 20) nach einem der vorherigen Ansprüche,
**dadurch gekennzeichnet, dass**
das wenigstens eine Trennelement (16) mit einer radialen Innenwand der Vorkammer (13, 22, 23) in Anlage kommt, wobei das Trennelement (16) mehrere Speisekanäle (17) aufweist, von denen wenigstens ein Speisekanal (17) im radial inneren Bereich des Trennelements (16) vorgesehen ist.

11. Hydrodynamische Kupplung (1, 20) nach einem der vorherigen Ansprüche,
**dadurch gekennzeichnet, dass**
die Speisekanäle (17) unterschiedliche Strömungsquerschnitte aufweisen.

12. Hydrodynamische Kupplung (1, 20) nach einem der vorherigen Ansprüche,
**dadurch gekennzeichnet, dass**
mehrere in Umfangsrichtung voneinander getrennte Vorkammern (13, 22, 23) vorgesehen sind.

13. Hydrodynamische Kupplung (1, 20) nach einem der Ansprüche 1 bis 11,
**dadurch gekennzeichnet, dass**
die Vorkammer (13, 22, 23) einen ringförmigen Innenraum aufweist.

14. Hydrodynamische Kupplung (1, 20) nach einem der vorherigen Ansprüche,
**dadurch gekennzeichnet, dass**
auf der der Vorkammer (13, 22) gegenüberliegenden Seite des Arbeitsraums (8) zusätzlich wenigstens eine weitere Vorkammer (23) vorgesehen und mit dem Außenrad (5) drehfest verbunden ist, wobei die Vorkammern (13, 22, 23) jeweils über wenigstens einen Zulaufkanal (15, 27, 28) und einen Rücklaufkanal (14, 25, 26) mit dem Arbeitsraum (8) verbunden sind.

## Claims

1. Hydrodynamic coupling (1, 20) having a bladed outer wheel (5) and a shell (6), which together form a working chamber (8) and are disposed to enable joint rotation around an axis of rotation (L), a bladed inner wheel (10) provided within the working chamber (8) which is disposed relative to the outer wheel (5) and the shell (6) to enable rotation around the axis of rotation (L), and also at least one pre-chamber (13, 22, 23), which is connected in a torsion-proof manner to the outer wheel (5), wherein a radial outer area of the pre-chamber (13, 22, 23) is connected via an inlet channel (15, 27, 28) and a radial inner area of the pre-chamber (13, 22, 23) is connected via a return channel (14, 25, 26) to the working chamber (8), wherein at least one separating element (16) is embodied on a radial outer wall of the pre-chamber (13, 22, 23) and extends over the entire circumferential area of the pre-chamber (13, 22, 23) into the pre-chamber (13, 22, 23), wherein the separating element (16) has at least one feed channel (17) which, at least below a predetermined fill level in the pre-chamber (13, 22, 23), has a smaller flow cross-section than the inlet channel (15, 27, 28),
**characterised in that**
the pre-chamber (13) is connected to the working chamber (8) in a radial inner area by the return channel (14) and in a radial outer area via the inlet channel (15).

2. Hydrodynamic coupling (1, 20) according to claim 1,
**characterised in that**
the outer wheel (5) is connected to a drive shaft (2) and the inner wheel (10) is connected to a take-off shaft (3) in a torsion-proof manner.

3. Hydrodynamic coupling (1, 20) according to claim 1 or 2,
**characterised in that**
at least one feed channel (17) is provided in a radially outer area of the separating element (16) and has a smaller flow cross-section than the inlet channel (15, 27, 28).

4. Hydrodynamic coupling (1, 20) according to one of the preceding claims,
**characterised in that**
at least one feed channel (17) has an essentially round flow cross-section.

5. Hydrodynamic coupling (1, 20) according to one of the preceding claims,
**characterised in that**
at least one feed channel (17) is embodied in the form of a slot running essentially radially, which especially extends into the radially outer area of the separating element (16).

6. Hydrodynamic coupling (1, 20) according to claim 5,
**characterised in that**
the ratio between height and the average width of the at least one feed channel (17) embodied in a slot shape amounts to 4:1 or more.

7. Hydrodynamic coupling (1, 20) according to claim 5 or 6,
**characterised in that**
the slot-shaped feed channel (17) has a variable width.

8. Hydrodynamic coupling (1, 20) according to claim 7,
**characterised in that**
the width becomes greater as the distance to the axis of rotation (L) decreases.

9. Hydrodynamic coupling (1, 20) according to claim 8,
**characterised in that**
the width becomes continuously greater as the distance to the axis of rotation (L) decreases.

10. Hydrodynamic coupling (1, 20) according to one of the preceding claims,
**characterised in that**
at least one separating element (16) comes into contact with a radial inner wall of the pre-chamber (13, 22, 23), wherein the separating element (16) has a number of the channels (17), of which at least one feed channel (17) is provided in the radially inner area of the separating element (16).

11. Hydrodynamic coupling (1, 20) according to one of the preceding claims,
**characterised in that**
the feed channels (17) have different flow cross-sections.

12. Hydrodynamic coupling (1, 20) according to one of the preceding claims,
**characterised in that**
a number of pre-chambers (13, 22, 23) separated from one another in the circumferential direction are provided.

13. Hydrodynamic coupling (1, 20) according to one of claims 1 to 11,
**characterised in that**
the pre-chamber (13, 22, 23) has an annular inner space.

14. Hydrodynamic coupling (1, 20) according to one of the preceding claims,
**characterised in that**
at least one further pre-chamber (23) is additionally provided on the side of the working chamber (8) lying opposite the pre-chamber (13, 22) and is connected to the outer wheel (5) in a torsion-proof manner, wherein the pre-chambers (13, 22, 23) are each connected via at least one inlet channel (15, 27, 28) and at least one return channel (14, 25, 26) to the working chamber (8).

## Revendications

1. Embrayage ( 1, 20 ) hydrodynamique ayant une roue ( 5 ) extérieure à aubage et une coquille ( 6 ), qui forment l'une avec l'autre un espace ( 8 ) de travail et qui sont montées tournantes ensemble autour d'un axe ( L ) de rotation, une roue ( 10 ) intérieure à aubage, qui est prévue à l'intérieur de l'espace ( 8 ) de travail et qui est montée tournante autour de l'axe ( L ) de rotation par rapport à la roue ( 5 ) extérieure, ainsi qu'au moins une antichambre ( 13, 22, 23 ), qui est solidaire en rotation de la roue ( 5 ) extérieure, une partie la plus à l'extérieur radialement de l'antichambre ( 13, 22, 23 ) communiquant avec l'espace ( 8 ) de travail par un canal ( 15, 27, 28 ) d'amenée et une partie la plus à l'intérieur radialement de l'antichambre ( 13, 22, 23 ) communiquant avec l'espace ( 8 ) de travail par un canal ( 14, 25, 26 ) de retour, au moins un élément ( 16 ) de séparation étant formé sur une paroi extérieure radiale de l'antichambre ( 13, 22, 23 ) et s'étendant dans l'antichambre ( 13, 22, 23 ) sur toute la partie périphérique de l'antichambre ( 13, 22, 23 ), l'élément ( 16 ) de séparation ayant un canal ( 17 ) d'alimentation, qui a au moins, en dessous d'un niveau donné à l'avance dans l'antichambre ( 13, 22, 23 ), une section transversale d'écoulement plus petite que le canal ( 15, 27, 28 ) d'amenée,
**caractérisé en ce que**
l'antichambre ( 13 ) dans une partie intérieure radialement communique avec l'espace ( 8 ) de travail par le canal ( 14 ) de retour et communique dans une partie extérieure radialement avec l'espace ( 8 ) de travail par le canal ( 15 ) d'amenée.

2. Embrayage ( 1, 20 ) hydrodynamique suivant la revendication 1,
**caractérisé en ce que**
la roue ( 5 ) extérieure est solidaire en rotation d'un arbre ( 2 ) menant et la roue ( 10 ) intérieure d'un arbre ( 3 ) mené.

3. Embrayage ( 1, 20 ) hydrodynamique suivant la revendication 1 ou 2,
**caractérisé en ce que**
au moins un canal ( 17 ) d'alimentation est prévu dans une partie extérieure radialement de l'élément ( 16 ) de séparation et a une section transversale d'écoulement plus petite que le canal ( 15, 27, 28 ) d'amenée.

4. Embrayage ( 1, 20 ) hydrodynamique suivant l'une des revendications précédentes,
**caractérisé en ce que**
le au moins un canal ( 17 ) d'alimentation a une section transversale d'écoulement sensiblement circulaire.

5. Embrayage ( 1, 20 ) hydrodynamique suivant l'une des revendications précédentes,
**caractérisé en ce que**
au moins un canal ( 17 ) d'alimentation est constitué sous la forme d'une fente, qui s'étend sensiblement radialement et qui va notamment jusque dans la partie extérieure radialement de l'élément ( 16 ) de séparation.

6. Embrayage ( 1, 20 ) hydrodynamique suivant la revendication 5,
**caractérisé en ce que**
le rapport entre la hauteur et la largeur médiane du au moins un canal ( 17 ) d'alimentation constitué sous la forme d'une fente est supérieur ou égal 4:1.

7. Embrayage ( 1, 20 ) hydrodynamique suivant la revendication 5 ou 6
**caractérisé en ce que**
le canal ( 17 ) d'alimentation en forme de fente a une largeur variable.

8. Embrayage ( 1, 20 ) hydrodynamique suivant la revendication 7,
**caractérisé en ce que**
la largeur augmente au fur et à mesure que diminue la distance à l'axe ( L ) de rotation.

9. Embrayage ( 1, 20 ) hydrodynamique suivant la revendication 8,
**caractérisé en ce que**
la largeur devient plus grande continuellement au fur et à mesure que diminue la distance à l'axe ( L ) de rotation.

10. Embrayage ( 1, 20 ) hydrodynamique suivant l'une des revendications précédentes,
**caractérisé en ce que**
le au moins un élément ( 16 ) de séparation vient en contact avec une paroi intérieure radiale de l'antichambre ( 13, 22, 23 ), l'élément ( 16 ) de séparation ayant plusieurs canaux ( 17 ) d'alimentation, dont l'un ( 17 ) au moins est prévu dans la partie intérieure radialement de l'élément ( 16 ) de séparation.

11. Embrayage ( 1, 20 ) hydrodynamique suivant l'une des revendications précédentes,
**caractérisé en ce que**
les canaux ( 17 ) d'alimentation ont des sections transversales d'écoulement différentes.

12. Embrayage ( 1, 20 ) hydrodynamique suivant l'une des revendications précédentes,
**caractérisé en ce que**
il est prévu plusieurs antichambres ( 13, 22, 23 ) séparées les unes des autres dans la direction périphérique.

13. Embrayage ( 1, 20 ) hydrodynamique suivant l'une des revendications 1 à 11,
**caractérisé en ce que**
l'antichambre ( 13, 22, 23 ) a un espace intérieur annulaire.

14. Embrayage ( 1, 20 ) hydrodynamique suivant l'une des revendications précédentes,
**caractérisé en ce que**
du côté de l'espace ( 8 ) de travail, opposé à l'antichambre ( 13, 22 ), est prévue supplémentaire au moins une autre antichambre ( 23 ), qui est solidaire en rotation de la roue ( 5 ) extérieure, les antichambres ( 13, 22, 23 ) communiquant avec l'espace ( 8 ) de travail respectivement par au moins un canal ( 15, 27, 28 ) d'amenée et par un canal ( 14, 25, 26 ) de retour.
